# EUROPEAN PATENT SPECIFICATION

(11) **EP 0 419 585 B1**
(45) Date of publication and mention of the grant of the patent: **26.07.1995**
(21) Application number: 90900484.8
(22) Date of filing: 22.11.1989
(51) Int. Cl.: B07B 1/46

(54) **MODULAR SYSTEM**
MODULARES SYSTEM
SYSTEME MODULAIRE

(30) Priority: 23.11.1988 US 275216
(43) Date of publication of application: 03.04.1991
(73) Proprietor: WESTERN WIRE WORKS, INCORPORATED, Portland, OR 97210 (US)
(72) Inventor: RUSSELL, Lynn, A., Scappoose, OR 97056 (US); GALTON, Zanley, F., Portland, OR 97201 (US); DORN, L., Allen, Washougal, WA 98671 (US)
(74) Representative: Spence, Anne
(86) International application number: US8905202
(87) International publication number: WO9005594

(56) References cited:
- EP-A- 0 167 999
- EP-A- 0 202 863
- DE-A- 3 123 405
- DE-A- 3 606 854
- DE-B- 1 155 963
- FR-A- 2 574 007
- US-A- 3 905 897
- US-A- 3 980 555
- US-A- 4 141 821
- US-A- 4 222 865
- US-A- 4 278 535
- US-A- 4 409 099

## Description

This invention relates to screening apparatus and more particularly to methods and apparatus for removably retaining screening modules on a rigid underlying support frame.

Various screening decks and screening elements are known which are intended for the same general purposes, for example as disclosed in US Patent Specifications 4120784, 4409099, 4219412, 4661245, 3980555, 4219412, 4141821 and 4670136. However these describe screening elements which are difficult to remove and install and may wear unevenly.

German Specification DE-B-1155963, provides a single screening module located on a frame by cap members screwed onto bolts inserted from the underside of the frame.

EP-A-0167999, which is regarded as the closest prior art, discloses a screening apparatus in accordance with the introduction of claim 1, but the retaining elements are in the form of elongate sections extruding substantially along the whole length of each screening module. There is no disclosure that the retaining elements are locked to the frame once inserted.

Another problem common to known screening apparatus is destructive abrasion of the frame members by particulate material that passes through the screening elements. Such material abrades exposed portions of the frame members after it exits the outlet side of the elements/modules adjacent the frame members.

Accordingly, the need remains for a system for screening particulate material having a plurality of modules supported on a frame, which system removably retains the modules on the frame and provides for fast, convenient and non-destructive removal and replacement of any of the screening modules. Preferably the system avoids abrasive wear of the underlying support surface.

The present invention provides a particulate material screening apparatus comprising a substantially rigid frame, a plurality of screening modules positionable substantially in sidewall to sidewall engagement on the frame; the frame including a plurality of mounting apertures; each screening module including an array of sieve apertures of a predetermined size for allowing particulate material up to the predetermined size to pass through the screening module, each screening module being positionable on the frame so that particulate material passing through the or each screening module passes through the frame; a plurality of retaining elements each having a base portion adapted to be located in a mounting aperture in the frame, and a head portion adapted to engage a screening module on the frame when the retaining element is connected to the frame, characterised in that each retaining element is a resilient lock pin adapted to engage, interlockingly and removably, with recess means in at least one module and each lock pin is adapted to remain locked to the frame while allowing removal of one or more modules from the frame and positioning of replacement modules on the frame.

With this arrangement the screening modules are removably secured to the frame and the modules may be pried off as required from the top or inlet side of the apparatus simply by disengaging a selected module from the lock pins that hold it, using a common screwdriver or similar instrument.

Preferably the head portion of at least some of the locking bolts is adapted to engage interlockingly and removably with recess means in an adjacent pair of modules at said sidewall to sidewall engagement. With advantage the recess means of two adjacent modules together define a channel of a shape and size complimentary to that of the head part of a lock pin.

In a preferred form the recess means of the modules and the head portions of the lock pins are formed one with a peripheral channel and the other with a complimentary collar extending perpendicular to the recess means and pins and positioned to provide the interlocking engagement when the modules are abutting the frame.

Preferably the screening modules are flat with solid edges and the frame includes a plurality of parallel elongate members, each for supporting the marginal edge portion of two adjacent modules. Preferably the maximum width of each elongate member is no more than twice the width of each marginal edge portion of a module so that the marginal edge portions of two abutting modules will cover the elongate member and particulate material passing through the sieve apertures will pass by the depending elongate member substantially without contacting the elongate member.

With advantage each elongate member includes a flat top section for contacting the screen module marginal edge and has a pair of side walls depending from the top section. Preferably the side walls are angled inwardly toward each other at a predetermined angle to allow particulate material passing through the screening modules to pass by the elongate members without contacting the elongate members. In a preferred form each sieve aperture tapers outwardly towards the outlet side of its module at an opening angle and preferably the predetermined angle is at least equal to the opening angle.

Preferably the base portion of each lock pin defines a recess housed to receive the wall surrounding a mounting aperture so as to positively locate each lock pin at a predetermined height relative to the frame.

With advantage both the lock pins and the screening modules are made from resilient material for example resilient polymeric material.

Preferably the head portion of each lock pin terminates in a substantially hemispherical crown arranged to extend above the inlet side of a screening module for diverting particulate material towards the array of sieve apertures.

The preferred arrangement described does not require specialised spacers or adaption strips intermediate the screening modules and the underlying frame, does not require access to the underside of the frame for insertion or removal of the lock pins or screening modules, does not increase the height of the apparatus above that of the frame and modules, and reduces or eliminates wear of the frame due to abrasion by particulate material passing through the modules.

In another aspect the invention provides
Embodiments of the invention will now be described, by way of example only with reference to the accompanying drawings of which:-
FIG. 1 is a fragmentary top plan view of a screening deck showing an improved screening module removably connected to a conventional frame by four lock pins, in accordance with the present invention.
FIG. 1A is a fragmentary top plan view of FIG. 1, except for an improved solid impact module removably connected to an underlying support surface by four lock pins.
FIG. 2 is a fragmentary top plan view of a screening deck frame showing the locations of mounting apertures for mounting screening modules to the frame and indicating in dashed lines the positioning of screening modules on the frame.
FIG. 3 is a cross-sectional view taken along line 3-3 of FIG. 1 showing in greater detail the interconnection of two abutting screening modules, a lock pin and the underlying frame member.
FIG. 3A is the cross-sectional view of FIG. 3, except that it shows the interconnection of two abutting one-piece solid impact modules and a lock pin having a portion of the head section removed.
FIG. 4 is an exploded fragmentary side plan view of a screening module and a lock pin, such as those shown in FIG. 1, aligned for interlockingly and removably engaging each other and further showing a portion of an underlying frame member in phantom.
FIG. 5 is a fragmentary cross-sectional view taken along line 5-5 in FIG. 8, illustrating the interrelationship of an abutting pair of screening modules removably connected by a lock pin to a frame member having a tapered U-shape.
FIG. 5A is the fragmentary cross-sectional view of FIG. 5, except that it illustrates an abutting pair of removably connected solid impact modules, each module being formed of a pair of impact sections of different materials joined one to the other, the head of the lock pin being below the upper surface of the module.
FIG. 6 is a cross-sectional view of an elongate frame member taken along line 6-6 in FIG. 8 with the lock pin removed.
FIG. 7 is a fragmentary cross-sectional view taken along line 7-7 of FIG. 8 showing a split lock pin fixed to a frame edge member and removably engaging a screening module.
FIG. 7A is the fragmentary cross-sectional view of FIG. 7, except that it shows a removably engaging solid impact module formed of a pair of impact sections of the same material joined one to the other, the respective impact sections having different hardnesses.
FIG. 8 is a fragmentary top plan view of an improved screening deck, including a screening module removably secured to a frame by four lock pins, the elongate frame members having reduced width and tapered sidewalls so that the frame members are covered by the screening modules and not exposed to abrasion by particulate material passing through the screening modules.
FIG. 9 is a fragmentary perspective view of one corner of a screening module, broken away to show a portion of the internal support member.
FIG. 10 is an end view of a trommel including the screening module system of the present invention.
FIG. 11 is a fragmentary end view of the trommel of FIG. 10 taken along line 11-11 of FIG. 12.
FIG. 12 is a side elevation view of the trommel of FIG. 10.

### DETAILED DESCRIPTION OF A PREFERRED EMBODIMENT

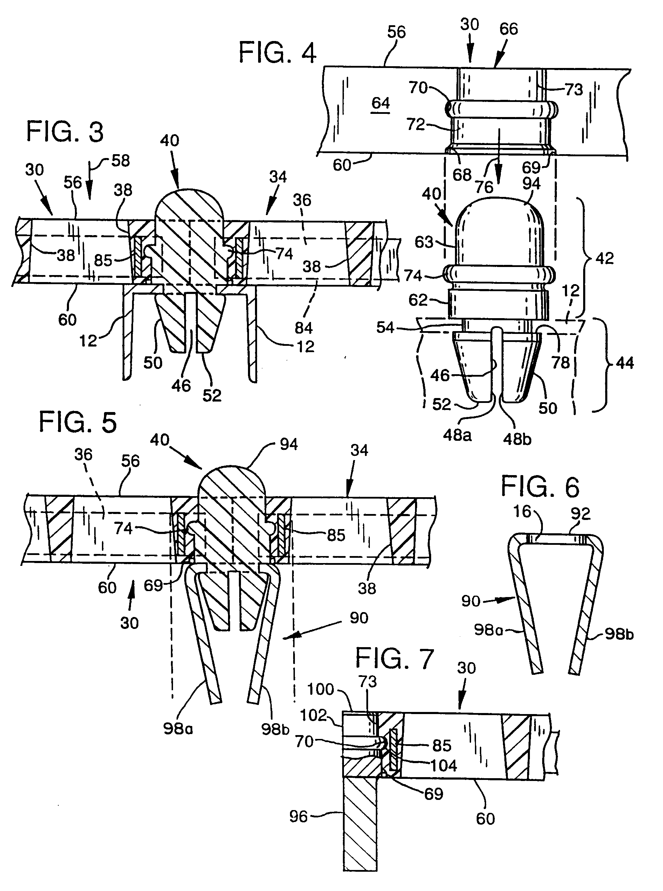

Referring to FIG. 2, a screening deck frame 10, shown in top view, comprises a series of rigid elongate members 12 spaced apart in parallel relationship. The elongate members 12 are interconnected at regular intervals by cross-members 14 to strengthen the frame and to support screening modules positioned on the frame as further described below. Frame members 12, 14 may be of any suitable cross-sectional shape, though an aspect of the present invention includes a specific improved frame member, described herein subsequently. The frame members are fixed to each for example, by welding to form a regular grid.

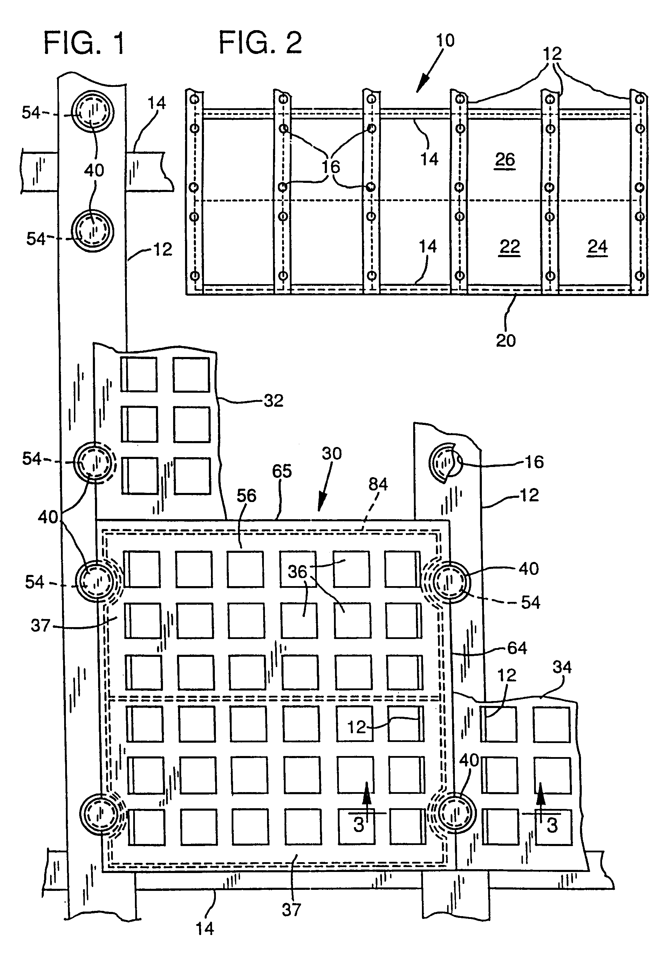

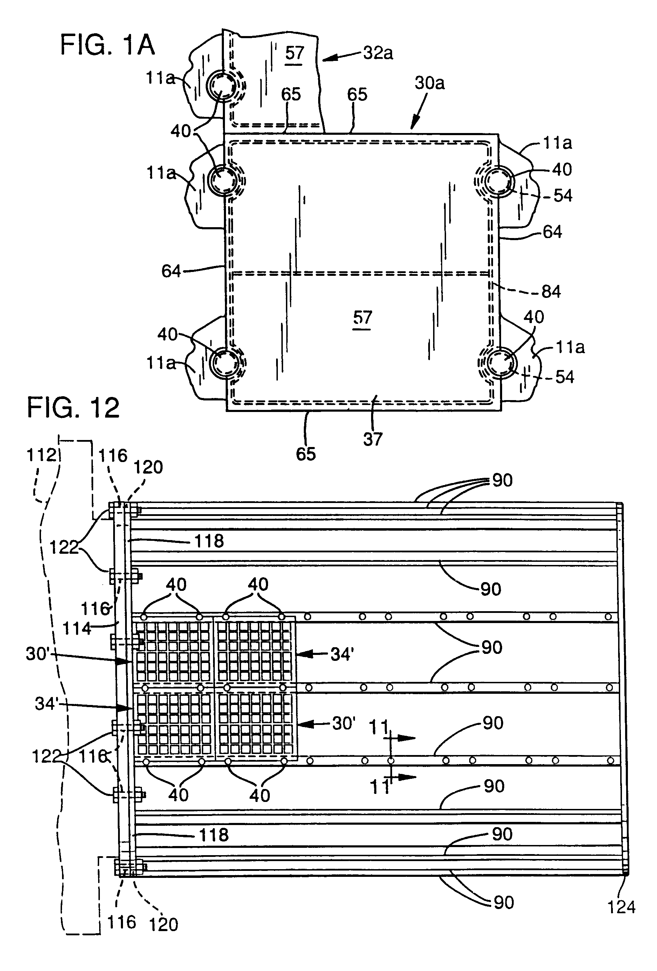

Frame 10 thus defines a series of screening apertures, delineated by dashed lines 20 in FIG. 2, for example, screening apertures 22, 24 and 26. Adjoining screening apertures, for example, apertures 22 and 26, may be covered by two square screening modules abutting each other end-to-end as shown in FIG. 1 (32, 30). Alternatively, a single rectangular module (not shown) may be positioned on the frame over adjoining apertures such as apertures 22 and 26. Elongate frame members 12 each includes a series of mounting apertures 16 spaced apart along the elongate member and oriented normal to the plane of the elongate member, for positioning and removably connecting screening modules to the frame.

Referring now to FIG. 1, an enlarged fragmentary top view of an assembled screening deck is shown. The screening deck includes a conventional frame, such as shown in FIG. 2, and a series of screening modules 30, 32, 34 mounted onto the frame. The screening modules 30, 32, 34 are substantially identical. Each module includes peripheral sidewalls 64 and endwalls 65. Modules 30 and 34 are arranged with the sidewalls 64 abutting each other in side-to-side relationship such that the abutting sidewalls are substantially centered over elongate frame member 12. Each module straddles two adjacent elongate frame members 12. Module 32 is positioned abutting module 30 in end-to-end relationship. The modules thus abut one another on all sides so as to form a substantially contiguous screening sieve.

Screening module 30 includes a grid defining an array of sieve apertures 36, each of predetermined size, for allowing particulate material up to the predetermined size to pass through the screening module. A solid peripheral margin 37 surrounds the grid for supporting the module on the frame. Cross-members 14 are spaced apart such that two modules 30, 32 cover the pair of screening apertures, such as apertures 22 and 26, intermediate two adjacent cross-members 14. The screening modules 30, 32, 34 are removably connected to elongate members 12 by lock pins 40 as described next.

Screening module 30 includes a top or inlet side 56 and an outlet side 60. Interior walls 38 of each sieve aperture 36 are slanted slightly outwardly toward the outlet side 60 of the module. The sieve apertures 36 thus have a slightly large dimension at the outlet side to prevent particulate material from becoming lodged in the module.

Referring now to FIG. 1a, an enlarged fragmentary top view of an assembled solid impact module system is shown. The system includes a section of an underlying support surface 11, which can comprise various surfaces to which any of the modules can be mounted, such as frame 12 shown in FIG. 2. Other support surfaces including but not limited to, the following: trommels, chutes, transfer points, dump truck boxes, feed boxes, sluices, hoppers, etc. A series of impact modules 30a and 32a are mounted onto the underlying support surface 11. The modules 30a and 32a are substantially identical, although they can be of different configurations such as an impact module in combination with a screening module. Each module includes peripheral sidewalls 64 and endwalls 65, a top impact surface 57 and a bottom surface 60 (see FIG. 4). Module 32a is positioned abutting module 30a in end-to-end relationship. It also includes internal frame 84 as hereinafter described in more detail. The modules are arranged as described with respect to system 10 above to abut one another on all sides so as to form a substantially contiguous screening sieve.

Modules 30a and 32a are solid impact members for diverting particulate material. The modules can be produced from a number of solid impact materials, but is preferably formed of a impact-resistant polymeric material, particularly elastomeric materials. Examples of the polymeric materials which can be employed in scope of the present invention are polyurethane, EPDM, natural rubber, SBR, ABS, butyl rubber, polypropylene, and the like. A solid peripheral margin 37 is provided for supporting the module on the support surface 11a. The screening modules 30a and 32a are removably connected to support surface 11 by lock pins 40 as described above.

Referring now to FIG. 3, a cross-sectional view taken along lines 3-3 of FIG. 1 illustrates use of a lock pin 40 in greater detail. The lock pin 40 is generally cylindrical and includes a head portion 42 and a base portion 44 (FIG. 4). Lock pin 40 is formed of a resilient, preferably polymeric material. The base portion 44 includes an annular recess 54 having a diameter substantially equal to the diameter of mounting aperture 16 in the frame. Prior to installing the screening modules, a lock pin 40 is inserted into each mounting aperture 16 from the top side of the frame.

Lock pin 40 is tapered inwardly along edges 50 and rounded adjacent the bottom end to form a blunt nose 52 to facilitate insertion of the lock pin into the mounting aperture. A transverse slot 46 extends longitudinally into the base portion 44 from the nose 52. The transverse slot has interior walls 48a and 48b. The diameter of base portion 44 below the annular recess 54 thus can be reduced by moving the interior walls 48a, 48b together, to facilitate insertion of the base portion through the mounting aperture 16. Once fully engaged in the mounting aperture 16, as shown in FIG. 3, the base portion lockingly engages the frame member 12 about the mounting aperture 16. Annular shoulder 78 contacts the underside of frame member 12, thereby fixing the lock pin to the frame. The lock pin is very difficult to remove from the frame except by cutting off the base portion. Generally, however, it is unnecessary to remove the lock pin as the present invention allows removal and replacement of screening modules as necessary, without removing the lock pin, as explained next.

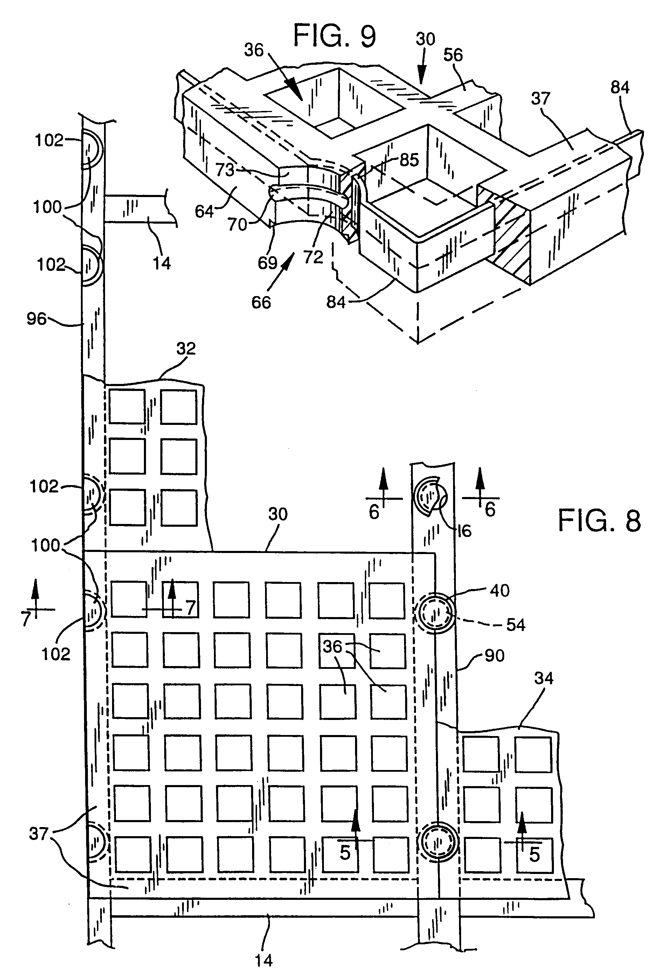

As noted, modules 30, 34 include peripheral sidewalls 64. A generally hemi-cylindrical recess 66 is formed in the sidewall 64, having an axis normal to the plane of the module for connecting the module to the frame. Recess 66 is sized to receive a bilaterally symmetric one-half of the head portion 42 of lock pin 40 as illustrated in FIG. 3. The bilaterally symmetric one-half of lock pin 40 is defined by an imaginary plane passing through the longitudinal axis of the lock pin and parallel to the frame member 12. The imaginary plane divides the head portion into a pair of bilaterally symmetric halves. Recess 66 is further illustrated in side view in FIG. 4 and in perspective view in FIG. 9. Recesses 66 in abutting modules 30, 34 in combination form a substantially cylindrical aperture.

FIG. 3A depicts the same view as FIG. 3 of the system, except that a pair of solid polymeric one-piece impact modules 30a and 34a (in phantom) are provided instead of modules 30, 34 of FIG. 3. Also, a pin 40a is provided in which the upper portion 63 of pin 40 has been partially removed thereby forming a foreshortened flat top portion 94a.

Referring to FIG. 4, a channel 70 extends along sidewall 64 within recess 66 and parallel to the plane of the module, which can be of solid or apertured construction. Channel 70 thus extends perpendicular to flow direction 58 intermediate the lower portion 72 and upper portion 73 of recess 66. Lock pin 40 includes a corresponding annular collar 74 on the head portion having a cross-sectional configuration complementary to the cross-sectional configuration of channel 70 for interlocking engagement in channel 70 for removably retaining the module in position abutting a support surface, such as frame member 12.

Module 30 is connected to the frame by first installing lock pins 40 on the frame; positioning the module with recess 66 aligned over lock pins 40; and then pressing the module down onto the lock pins as indicated by arrow 76 in FIG. 4 until the outlet side 60 of the module contacts the support frame member 12, thereby interlockingly engaging the lock pin and the module.

The recess 66 may be of uniform diameter, in which case the head portion 42 of lock pin 40 correspondingly would be of uniform diameter. Alternatively, the recess 66 may include a lower portion 72 having a first diameter and an upper portion 73 having a second diameter somewhat less than the diameter of lower portion 72, as shown in FIG. 4. Accordingly, the head portion 42 of lock pin 40 includes a lower portion 62 having a diameter approximately equal to the diameter of lower portion 72 of recess 66 and an upper portion 63, having a diameter approximately equal to the diameter of upper portion 73 of recess 66.

The head portion of the lock pin is rounded at the top end to form a generally hemispherical crown 94 to divert particulate material toward the screening area, i.e. the array of sieve apertures 36. Additionally, recess 66 is enlarged at the outlet side 60 of the module to form inlet portion 69. The recess includes a chamfered region 68 intermediate the enlarged inlet portion 69 and the lower cylindrical portion 72.

An internal support member 84, shown in phantom in FIG. 1 and revealed in FIG. 9 where the module is broken away, is provided to stiffen module 30, particularly to prevent deformation of the module in the flow direction caused by the weight of particulate material on the inlet side of the module. Internal frame 84 is formed of material generally rectangular in cross-section, having its greater dimension parallel to peripheral sidewall 64 of the module. Internal frame 84 is formed to include an indentation 85 extending alongside recess 66 to strengthen the module in the area of the recess for more secure engagement of the module with the lock pin. The arrangement of support frame 84 "on edge", as illustrated, provides maximum rigidity in the direction of flow of particulate material, indicated by arrow 58 (FIG. 3), in order to keep the module flat, while permitting elastic deformation of the module in a direction generally normal to the flow direction, especially around recess 66, to allow engagement and disengagement of the module with the lock pins.

FIG. 5 is similar to FIG. 3 except that FIG. 5 is a cross-sectional view taken along line 5-5 in FIG. 8. FIG. 8 shows screening modules 30,32,34 as described above, but connected to an improved frame. Referring back to FIGS. 1 and 3 for comparison, the elongate members 12 in a conventional frame extend beyond the solid margin 37 of screening aperture 30 and into the material flow path. As a result, particulate material that passes through sieve apertures 36 alongside frame members 12 abrades and thereby wears the frame members. This requires eventual replacement of the frame members 12.

FIG. 5A is similar to FIG. 5, except that FIG. 5A comprises another version of a solid impact module 34a which includes solid impact section 34b attached to screening module 34 described above. The solid impact module 34a can also be of single- or multi-sectional construction, of the same or of a different impact-resistant materials. In this instance, a multi-sectional impact module having respective sections 34b and 34c made of different impact-resistant materials is provided. The respective sections can be adhered one to the other employing, for instance, a conventional high strength adhesive bonding agent. It should be noted that solid impact section 34a extends above and surrounds the top 94 of pin 40.

Referring now to FIGS. 5 and 6, an improved frame member 90 is shown, having a tapered U-shape cross-section. A flat top section 92 of frame member 90 supports the modules 30,34 as do frame members 12, but the improved frame member 90 does not extend into the path of particulate material passing through the modules. Frame member 90 includes depending sidewalls 98a, 98b. Sidewalls 98a, 98b are tapered inwardly to allow screened material to pass by the frame without contacting the frame member 90, so it is not subject to destructive wear. The sidewalls depend at an angle that is greater than the angle of sieve aperture sidewall 38. Frame members 90 may be interconnected by conventional cross members 14 having, for example, rectangular cross-sectional shape, as the cross members are not exposed to the particulate material.

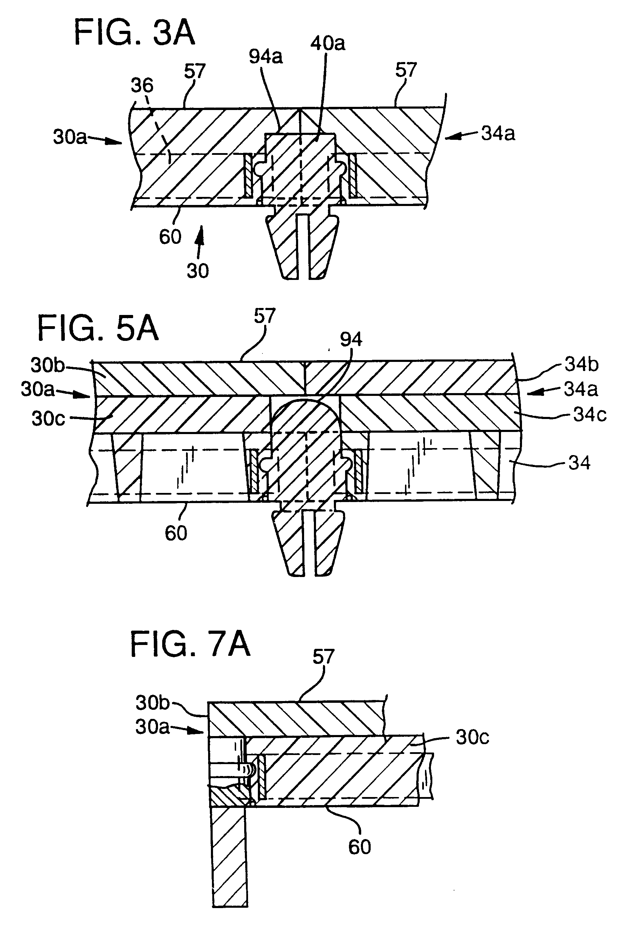

Referring now to FIGS. 7 and 8, a frame edge member 96 having a rectangular cross-section is incorporated along an outboard edge of the improved screening deck. Frame edge member 96 is approximately half as wide as the top section of frame member 90, i.e., about the same width as the solid margin 37 of the screening module. This maximizes the useful screening area of the screening deck.

A generally hemi-cylindrical split lock pin 100 having a flat side 102 is fixed to frame edge member 96, for example, by welding, for removably connecting one side of module 30 to frame edge member 96. The split lock pin 100 is positioned with its flat edge 102 aligned with the outside edge of frame edge member 96. The split lock pin is sized to fit into recess 66 in the sidewall of module 30 for positioning the module on the frame. Split lock pin 100 includes a semi-annular collar 104 sized for interlockingly engaging the channel 70 in recess 66 like the annular collar in lock pin 40. Split lock pin 100 is formed of a rigid material such as a metal. It need not be resilient like lock pin 40 as module 30 can be removed by first disengaging it from lock pins 40 along the side of the module opposite the frame edge member, and then moving the module laterally to disengage it from split lock pins 100.

FIG. 7A is similar to the system set forth in FIG. 7 above, except that another version of solid impact module 30a is illustratively described. More specifically, solid impact module 30a comprises a multi-sectional construction in which the upper section 30b and the lower section 30c are fabricated of the same impact-resistant material. The distinction between sections 30b and 30c is that they are made at different hardness values. Preferably, the outer section 30b has a higher hardness value than the inner section 30c.

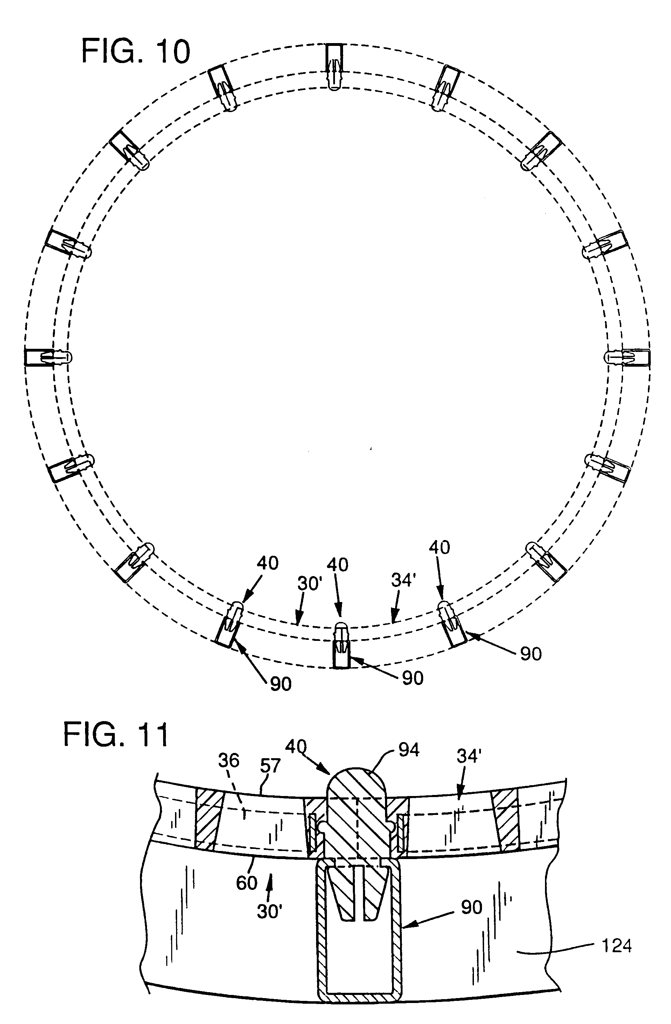

Another use of the modular system of this invention is shown in FIGS. 10-12. More specifically, a trommel, which is cantilevered at free end 124, is provided for screening particulate material according to a predetermined size by rotation about a horizontally-extended central axis. In the typical case, the material is fed into a means 112 for supporting and rotating the trommel (in phantom in FIG. 12), such as a Sag mill or ball mill. The material passes in a horizontal path through the central passageway of the trommel 110. The undersized particles pass through the sieve apertures of the modules 30' and 34', and the oversized material passes through trommel and out of the free end. The support and rotation means 112 includes at its outlet end a support flange 114 having bolt holes 116 contained therein. The trommel has a support flange 118 includes matching bolt holes 120 to the bolt holes 116. Within these bolt holes 116 and 120, respectively, are bolts 122 which connect the trommel to the support and rotation means 112. Curved screening modules 30' and 34' are attached to an underlying support surface, in this case a plurality of horizontally-extending frame members 90, by pins 40 to form the cylindrical overall shape of the trommel. FIGS. 10 and 11 shows the specific manner of attachment of the modules 30' and 34' to the frame 90. Frame members 90 are welded at its respective ends to trommel bolt flange 120 and trommel end flange 124.

## Claims

1. A particulate material screening apparatus comprising a substantially rigid frame (10), a plurality of screening modules (30, 32, 34) positionable substantially in sidewall to sidewall engagement on the frame (10); the frame (10) including a plurality of mounting apertures (16); each screening module (30, 32, 34) including an array of sieve apertures (36) of a predetermined size for allowing particulate material up to the predetermined size to pass through the screening module (30, 32, 34), each screening module (30, 32, 34) being positionable on the frame (10) so that particulate material passing through the or each screening module (30, 32, 34) passes through the frame (10); a plurality of resilient retaining elements (40) each having a base portion (44) adapted to be located in a mounting aperture (16) in the frame (10), and a head portion (42) adapted to engage a screening module (30, 32, 34) on the frame (10) when the retaining element (40) is connected to the frame (10), characterised in that each retaining element is a lock pin adapted to engage, interlockingly and removably, with recess means (66) in at least one module and each lock pin is adapted to remain locked to the frame (10) while allowing removal of one or more modules (30, 32, 34) from the frame (10) and positioning of replacement modules (30, 32, 34) on the frame (10).

2. Screening apparatus according to claim 1 characterised in that the head portion of at least some of the lock pins is adapted to engage interlockingly and removably with recess means (66) in an adjacent pair of modules at said sidewall to sidewall engagement.

3. A screening apparatus according to claim 1 or claim 2 adapted to retain an individual module by engagement with four spaced lock pins, two along each of two opposite sides.

4. A screening apparatus according to any of claims 1 to 3 characterised in that the base portion (44) of each lock pin is sized for insertion into a mounting aperture (16) and includes a complimentary recess (54) sized to receive the wall defining a mounting aperture (16) to connect the lock pin (40) to the frame (10) in a predetermined position in the mounting aperture (16), each mounting aperture (16) is circular sectioned cylindrical and has a predetermined diameter; and
the recess (54) in the base portion (44) is annular and has a circular sectioned cylindrical inner diameter complimentary to the diameter of the mounting aperture (16).

5. A screening apparatus according to any of claims 1 to 4 characterised in that
the base portion (44) of each lock pin is tapered inwardly to facilitate inserting the lock pin (44) into a mounting aperture (16); and
the base portion (44) is rounded adjacent the bottom end to form a blunt nose (52) to facilitate inserting the base portion (44) into a mounting aperture (16).

6. A screening apparatus according to any of claims 1 to 5 characterised in that
each lock pin (44) is formed of a resilient material; and
the base portion (44) includes a longitudinal slot (46) having interior walls (48a, 48b) such that the diameter of the base portion (44) below the recess (54) can be reduced by moving the interior walls (48a, 48b) together to facilitate insertion of the base portion (44) through a mounting aperture (16).

7. A screening apparatus according to any of claims 1 to 6 characterised in that
each screening module (30, 32, 34) includes a solid margin (37) surrounding the sieve aperture means (36), the margin (37) including a peripheral sidewall (64) defining at least one recess (66) (forming said recess means), and each recess is shaped for receiving interlockingly the head portion (42) of a lock pin (40).

8. A screening apparatus according to claim 7 characterised in that
each screening module (10) defines a flow path for allowing particulate material up to a predetermined size to pass through the screening module (30, 32, 34) along the flow path;
each recess (66) in the sidewall (64) is substantially hemi-cylindrical and has its axis substantially parallel to the flow path; and
the head portion (42) of each associated lock pin (40) is substantially cylindrical, whereby a section of the head portion (42) is interlockingly engagable in a recess (66).

9. A screening apparatus according to any of claims 1 to 8 characterised in that the lock pins and screening modules are each formed of resilient material, and the recess means (66) of the modules and the head portions (42) of the lock pins are formed one with a peripheral channel (70) and the other with a complimentary collar (74) extending perpendicular to the recess means and pins, and positioned to provide said interlocking engagement when the modules are abutting the frame (10).

10. A screening apparatus according to any of claims 1 to 9 in which the frame (10) includes a plurality of elongate members (12) spaced apart in parallel relation for supporting the screening modules (30, 32, 34); the mounting apertures (16) are spaced apart along each elongate member (12) and oriented normal to the plane of the elongate members (12) and contain lock pins; and in which the modules, each having a peripheral sidewall (64), are positioned on the frame (10) alongside each other in sidewall-to-sidewall relationship along the elongate members (12).

11. A screening apparatus according to any of claims 1 to 10 characterised in that each of the adjacent pair of screening modules (30, 32, 34) includes:
means in the sidewall (64) defining a substantially hemi-cylindrical recess (66) of a predetermined diameter having a longitudinal axis normal to the plane of the module (30, 32, 34) for receiving the head portion (42) of a lock pin (40); and
means defining a channel (70) extending along the sidewall (64) within the recess (66) parallel to the plane of the module (30, 32, 34);
the pair of modules (30, 32, 34) being positioned so that the recesses (70) in the opposed sidewalls (64) of the modules (30, 32, 34) are registered with each other to define, in combination, a substantially cylindrical recess (66) having a peripheral channel (70);
the head portion (42) of the lock pin (40) being generally cylindrical, having a diameter substantially equal to the diameter of the cylindrical recess (70) for interlocking engagement in the cylindrical recess (66), whereby a bilaterally symmetric half of the head portion (42) extends within the recess (66) in a first one of the pair of modules (30, 32, 34) and the other half of the head portion (42) extends within the recess (66) in the second module (30, 32, 34); and
the head portion (42) of the lock pin (40) further includes an annular collar (74) extending around the head portion (42), the collar (74) sized for interlocking engagement in the peripheral channel (70) for removably retaining the pair of modules (30, 32, 34) abutting the frame (10).

12. Screening apparatus according to any of claims 1 to 11 characterised in that each screening module (30, 32, 34) and lock pin (40) is formed of a resilient polymeric material.

13. Screening apparatus according to any of claims 1 to 12 characterised in that each head portion (42) terminates in a substantially hemispherical crown (94) to extend above the inlet side of a screening module (56) for diverting particulate material toward the array of sieve apertures (36).

14. Screening apparatus according to any of claims 1 to 13 characterised in that the base portion of each lock pin has an annular shoulder (78) for engaging the underside of the frame (10) around a mounting aperture (16) to resist withdrawal of the lock pin (40) from the mounting aperture (16).

15. A screening apparatus according to any of claims 1 to 14 characterised in that the frame (10) comprises:
a plurality of rigid elongate members (12) spaced apart at regular intervals in parallel relationship; and
a plurality of rigid cross members (14) spaced apart at regular intervals in parallel relationship and normal to the elongate members (12);
the cross members (14) fixed at each end to the elongate members (12) so as to fix the elongate members (12) in a substantially coplanar relationship for supporting the screening modules (30, 32, 34) positioned on the frame (10);
the elongate members (12) each including a flat top section (92) for contacting the screening modules (30, 32, 34) and a pair of sidewalls (98a, 98b) depending from the top section (92) such that each elongate member (12) defines an inverted U-shape in cross section for strengthening the elongate member (12); and
the sidewalls (98a, 98b) are angled inwardly toward each other at a predetermined angle for allowing particulate material passing through the screening modules (30, 32, 34) to pass by the elongate members (12) without contacting the elongate members (12).

16. A screening apparatus according to claim 15 characterised in that each module (30, 32, 34) has a solid margin (37) and the frame (10) includes a frame edge member (96) defining an outboard edge of the frame (10), the frame edge member (96) being fixed to one end of each of the plurality of cross members (14) in parallel relationship to the elongate members (12);
the frame edge member (96) having a width approximately equal to the width of the module margin (37) for supporting the outboard edge of the modules (30, 32, 34) while maximizing the useful screening area of the frame (10).

17. A screening apparatus according to claim 16 including at least one rigid split lock pin (100) fixed to the frame edge member (96) for removably connecting a module (30, 32, 34) to the frame (10) along the outboard edge of the frame (10).

18. A screening apparatus (10) according to claim 15, characterised in that each sieve aperture (36) tapers outward toward the outlet side (60) of its module (30, 32, 34) at an opening angle, and
the predetermined angle is at least equal to the opening angle.

19. A screening apparatus according to claim 18 in which the opening angle is approximately 2 degrees and the predetermined angle is approximately 10 degrees.

20. Screening apparatus according to any of claims 1 to 19 in which the frame (10) includes a plurality of parallel elongate members (12) for supporting the marginal edge portions (37) of adjacent modules and in which the maximum width of each elongate member (12) is no more than twice the width of each marginal edge portion of a module, so that the marginal portions (37) of two abutting modules (30, 32, 34) cover the elongate member and particulate material passing through the sieve apertures (36) passes by the depending elongate member (98a, 98b) substantially without contacting the elongate member.

21. A screening method which comprises locating a plurality of screening modules in substantial sidewall to sidewall engagement with each other on a rigid frame having a plurality of retaining elements, each retaining element being engaged with the frame and having a head portion engaging a screening module, so that the positioning of the or each module is determined by the retaining elements, and the or each module being removable from the frame and replacable by an alternative module, characterised in that the retaining elements are resilient lock pins characterised by disengaging a lock pin and at least one module;
removing the module(s) from the frame while the lock pins remain connected to the frame;
positioning at least one replacement module on the frame; and
interlockingly engaging the lock pin(s) and the replacement module(s) so that the lock pin(s) maintains the positioning of the replacement module(s) on the frame.

22. A method according to claim 21 wherein disengaging the lock pin and the module includes:
providing rigid means for disengaging the lock pin
inserting the disengaging means between the sidewalls of adjacent modules from the inlet side of the modules; and
moving the disengaging means so as to separate the module and the lock pin.

23. A method according to claim 21 or claim 222 which includes inserting the lock pins into apertures in the frame before engaging the lock pins and the modules characterised in that the lock pins are inserted from the inlet side of the frame.

24. A method according to any of claims 21 to 23 characterised in that a first section of at least one lock pin engages a first module and a second section of the same lock pin engages a second module.

## Patentansprüche

1. Siebboden für Siebgut bestehend aus einem im wesentlichen starren Rahmen (10), einer Vielzahl von Siebmodulen (30, 32, 34), die im wesentlichen in Seitenwand-an-Seitenwand-Anlage auf dem Rahmen (10) angeordnet werden können, wobei der Rahmen (10) eine Vielzahl von Halteöffnungen (16) und jedes Siebmodul (30, 32, 34) eine Anordnung von Sieböffnungen (36) vorbestimmter Größe aufweist, die das Siebgut bis zu einer vorbestimmten Größe durch die Siebmodule (30, 32, 34) durchlassen, wobei jedes Siebmodul (30, 32, 34) so auf dem Rahmen (10) positionierbar ist, daß das durch das oder jedes Siebmodul (30, 32, 34) hindurchtretende Siebgut durch den Rahmen (10) hindurchtritt, einer Vielzahl elastischer Halteelemente (40), die jeweils einen Fußteil (44), der in einer Halteöffnung (16) im Rahmen (10) anordbar ist, und einen Kopfteil (42) aufweisen, der in ein Siebmodul (30, 32, 34) auf dem Rahmen (10) eingreifen kann, wenn das Halteelement (40) mit dem Rahmen (10) verbunden ist, dadurch gekennzeichnet, daß jedes Halteelement ein Sperrstift ist, der verriegelnd und herausnehmbar mit Ausnehmungen (66) in wenigstens einem Modul in Eingriff treten kann und daß jeder Sperrstift im Rahmen (10) eingerastet verbleiben kann, während er die Entfernung eines oder mehrerer Module (30, 32, 34) aus dem Rahmen (10) und die Anordnung von Ersatzmodulen (30, 32, 34) auf dem Rahmen (10) zuläßt.

2. Siebboden nach Anspruch 1, dadurch gekennzeichnet, daß der Kopfteil zumindest einiger Sperrstifte verriegelnd und herausnehmbar mit Ausnehmungen (66) in einem in Seitenwand-an-Seitenwand-Anlage angrenzenden Modulpaar in Eingriff treten kann.

3. Siebboden nach Anspruch 1 oder 2, dadurch gekennzeichnet, daß ein einzelnes Modul durch Eingriff von vier in Abstand angeordneten Sperrstiften gehalten werden kann, wobei jeweils zwei entlang jeder der beiden gegenüberliegenden Seiten angeordnet sind.

4. Siebboden nach einem der Ansprüche 1 bis 3, dadurch gekennzeichnet, daß der Fußteil (44) jedes Sperrstiftes zum Einstecken in eine Halteöffnung (16) ausgelegt ist und eine komplimentäre Aussparung (54) umfaßt, die zur Aufnahme der Wand ausgelegt ist, die die Halteöffnung (16) definiert, um den Sperrstift (40) mit dem Rahmen (10) in einer vorbestimmten Position in der Halteöffnung (16) zu verbinden, daß jede Halteöffnung (16) im Querschnitt zylindrisch ist und einen vorbestimmten Durchmesser besitzt und
daß die Aussparung (54) im Fußteil (44) ringförmig ist und einen im Querschnitt zylindrischen Innendurchmesser besitzt, der komplementär zu dem Durchmesser der Halteöffnung (16) ist.

5. Siebboden nach einem der Ansprüche 1 bis 4, dadurch gekennzeichnet,
daß der Fußteil (44) jedes Sperrstiftes sich nach innen verjüngt, um ein Einstecken des Sperrstiftes (44) in die Halteöffnung (16) zu erleichtern, und daß der Fußteil (44) am unteren Ende abgerundet ist und eine stumpfe Nase (52) bildet, um ein Einstecken des Fußteils (44) in eine Halteöffnung (16) zu erleichtern.

6. Siebboden nach einem der Ansprüche 1 bis 5, dadurch gekennzeichnet, daß jeder Sperrstift (44) aus elastischem Material besteht, und
daß der Fußteil (44) einen Längsschlitz (46) mit Innenwänden (48a, 48b) umfaßt, so daß der Durchmesser des Fußteils (44) unterhalb der Aussparung (54) durch Zusammendrücken der Innenwände (48a, 48b) reduzierbar ist, um ein Einstecken des Fußteils (44) durch eine Halteöffnung (16) zu erleichtern.

7. Siebboden nach einem der Ansprüche 1 bis 6, dadurch gekennzeichnet, daß jedes Siebmodul (30, 32, 34) einen festen Rand (37) aufweist, der die Sieböffnungen (36) umgibt, wobei der Rand (37) eine umlaufende Seitenwand (64) umfaßt, die zumindest eine Ausnehmung (66) definiert (die Ausnehmungen bildet), und daß jede Ausnehmung so geformt ist, daß sie den Kopfteil (42) eines Sperrstiftes (40) verriegelnd aufnimmt.

8. Siebboden nach Anspruch 7, dadurch gekennzeichnet, daß jedes Siebmodul (10) einen Durchflußweg definiert, um Siebgut bis zu einer vorbestimmten Größe durch das Siembodul (30, 32, 34) entlang dem Durchflußweg durchzulassen,
daß jede Ausnehmung (66) in der Seitenwand (64) im wesentlichen halbzylindrisch ist und mit ihrer Achse im wesentlichen parallel zum Durchflußweg verläuft, und
daß der Kopfteil (42) jedes zugehörigen Sperrstiftes (40) im wesentlichen zylindrisch ist, wobei ein Bereich des Kopfteils (42) verriegelnd in eine Ausnehmung (66) eingreifen kann.

9. Siebboden nach einem der Ansprüche 1 bis 8, dadurch gekennzeichnet, daß die Sperrstifte und Siebmodule jeweils aus elastischem Material bestehen und daß die Ausnehmungen (66) der Module und die Kopfteile (42) der Sperrstifte einerseits mit einer umlaufenden Rille (70) und andererseits mit einem komplementären Kragen (74) ausgebildet, der sich senkrecht zu den Ausnehmungen und Stiften erstreckt, und so angeordnet sind, daß sie für den verriegelnden Eingriff sorgen, wenn die Module auf dem Rahmen (10) aufliegen.

10. Siebboden nach einem der Ansprüche 1 bis 9, dadurch gekennzeichnet, daß der Rahmen (10) eine Vielzahl länglicher Elemente (12) aufweist, die mit Zwischenraum parallel zueinander angeordnet sind und die Siebmodule (30, 32, 34) tragen, wobei die Halteöffnungen (16) mit Zwischenraum entlang jedem länglichen Element (12) angeordnet und normal zur Ebene der länglichen Elemente (12) orientiert sind sowie Sperrstifte enthalten, und wobei die Module, die jeweils eine umlaufende Seitenwand (64) besitzen, auf dem Rahmen (10) zueinander in seitenwand-an-Seitenwand-Anlage entlang der länglichen Elemente (12) angeordnet sind.

11. Siebboden nach einem der Ansprüche 1 bis 10, dadurch gekennzeichnet, daß jedes angrenzende Paar von Siebmodulen (30, 32, 34) umfaßt:
Einrichtung in der Seitenwand (64), die eine im wesentlichen halbzylindrische Ausnehmung (66) mit einem vorbestimmten Durchmesser und mit einer normal zur Ebene des Moduls (30, 32, 34) verlaufenden Längsachse definieren, um den Kopfteil (42) eines Sperrstiftes (40) aufzunehmen und
Einrichtungen, die eine Rille (70) definieren, die sich entlang der Seitenwand (64) innerhalb der Ausnehmung (66) parallel zur Ebene des Moduls (30, 32, 34) erstreckt;
wobei das Modulpaar (30, 32, 34) so angeordnet ist, daß die Ausnehmungen (70) in gegenüberliegenden Seitenwänden (64) der Module (30, 32, 34) im gegenseitigem Zusammenwirken eine im wesentlichen zylindrische Ausnehmung (66) mit einer umlaufenden Rille (70) ergeben,
wobei der Kopfteil (42) des im wesentlichen zylindrischen Sperrstiftes (40), den im wesentlichen gleichen Durchmesser wie der Durchmesser der zylindrischen Ausnehmung (70) für den verriegelnden Eingriff in der zylindrischen Ausnehmung (66) besitzt, wobei eine zweiseitig symmetrische Hälfte des Kopfteiles (42) sich in der Ausnehmung (66) des ersten Moduls des Modulpaares (30, 32, 34) und die andere Hälfte des Kopfteiles (42) sich in der Ausnehmung (66) des zweiten Moduls (30, 32, 34) erstreckt, und
wobei der Kopfteil (42) des Sperrstiftes (40) ferner einen ringförmigen Kragen (74) umfaßt, der sich um den Kopfteil (42) erstreckt, wobei der Kragen (74) für den verriegelnden Eingriff mit der umlaufenden Rille (70) ausgelegt ist, um das auf dem Rahmen (10) aufliegende Modulpaar (30, 32, 34) abnehmbar zu halten.

12. Siebboden nach einem der Ansprüche 1 bis 11, dadurch gekennzeichnet, daß jedes Siebmodul (30, 32, 34) und jeder Sperrstift (40) aus elastischem polymeren Material besteht.

13. Siebboden nach einem der Ansprüche 1 bis 12, dadurch gekennzeichnet, daß jeder Kopfteil (42) in einer im wesentlichen halbkugelförmigen Krone (94) endet und sich über die Einlaßseite eines Siebmoduls (56) hinaus erstreckt, um so das Siebgut zu der Anordnung von Sieböffnungen (36) abzulenken.

14. Siebboden nach einem der Ansprüche 1 bis 13, dadurch gekennzeichnet, daß der Fußteil jedes Sperrstiftes eine ringförmige Schulter (78) besitzt, die mit der Unterseite des Rahmens (10) um eine Halteöffnung (16) herum in Eingriff tritt, um dem Abziehen des Sperrstiftes (40) aus der Halteöffnung (16) entgegen zu wirken.

15. Siebboden nach einem der Ansprüche 1 bis 14, dadurch gekennzeichnet, daß der Rahmen (10) umfaßt:
eine Vielzahl von starren länglichen Elementen (12), die mit Zwischenraum in regelmäßigen Intervallen parallel angeordnet sind,
eine Vielzahl starrer Querteile (14), die mit Zwischenraum in regelmäßigen Intervallen zueinander und normal zu den länglichen Elementen (12) angeordnet sind,
wobei die Querteile (14) an jedem Ende an den länglichen Elementen (12) befestigt sind und diese im wesentlichen koplanar halten, um die auf dem Rahmen (10) angeordneten Siebmodule (30, 32, 34) zu tragen, wobei die länglichen Elemente (12) jeweils eine flache Oberseite (92) als Auflage für die Siebmodule (30, 32, 34) und ein Paar Seitenwände (98a, 98b) aufweisen, die zur Versteifung der länglichen Elemente von der Oberseite (92) so nach unten verlaufen, daß jedes längliche Element (12) im Querschnitt eine umgekehrte U-Form aufweist, und
wobei die Seitenwände (98a, 98b) unter einem vorbestimmten Winkel nach Innen aufeinander zu abgewinkelt sind, um Siebgut ohne Berührung der länglichen Elemente durch die Siebmodule (30, 32, 34) durchzulassen.

16. Siebboden nach Anspruch 15, dadurch gekennzeichnet, daß jedes Modul (30, 32, 34) einen festen Rand (37) hat und daß der Rahmen (10) ein Rahmenrandelement (96) aufweist, das den Außenrand des Rahmens (10) bildet, wobei das Rahmenrandelement (96) an einem Ende jedes der Vielzahl von Querteilen (14) in paralleler Ausrichtung zu den länglichen Elementen (12) befestigt ist,
wobei das Rahmenrandelement (96) eine ungefähr gleiche Breite wie die Breite des Modulrandes (37) aufweist, um die Außenkante der Module (30, 32, 34) zu lagern, während die nutzbare Siebfläche des Rahmens (10) maximiert ist.

17. Siebboden nach Anspruch 16, gekennzeichnet durch zumindest einen starren geteilten Sperrstift (100), der an dem Rahmenrandelement (96) befestigt ist, so daß ein Modul (30, 32, 34) mit dem Rahmen (10) entlang dessen Außenrand lösbar verbunden ist.

18. Siebboden nach Anspruch 15, dadurch gekennzeichnet, daß sich jede Sieböffnung (36) nach außen in Richtung der Auslaßseite (60) ihres Moduls (30, 32, 34) unter einem Öffnungswinkel verjüngt, und daß der vorbestimmte Winkel zumindest gleichgroß dem Öffnungswinkel ist.

19. Siebboden nach Anspruch 18, dadurch gekennzeichnet, daß der Öffnungswinkel von ungefähr 2° und der vorbestimmte Winkel ungefähr 10° beträgt.

20. Siebboden nach einem der Ansprüche 1 bis 19, dadurch gekennzeichnet, daß der Rahmen (10) eine Vielzahl paralleler länglicher Elemente (12) aufweist, um die Randkantenbereiche (37) benachbarter Module zu tragen, und daß die maximale Breite jedes länglichen Elementes (12) nicht mehr als zweimal die Breite jedes Randkantenbereichs eines Moduls beträgt, so daß die Randbereiche (37) zweier anstoßender Module (30, 32, 34) das längliche Element überdecken und das durch die Sieböffnungen (36) hindurchgehende Siebgut das herabhängende längliche Element (98a, 98b) passiert, ohne es zu berühren.

21. Siebverfahren, wobei eine Vielzahl von Siebmodulen im wesentlichen in Seitenwand-an-Seitenwand-Anlage auf einem starren Rahmen angeordnet wird, der eine Vielzahl von Halteelementen umfaßt, wobei jedes Halteelement in den Rahmen eingreift und einen Kopfteil aufweist, der in ein Siebmodul eingreift, so daß die Anordnung des oder jedes Moduls durch die Halteelemente bestimmt wird, und wobei das oder jedes Modul aus dem Rahmen herausnehmbar und durch ein alternatives Modul ersetzbar ist, dadurch gekennzeichnet, daß die Halteelemente elastische Sperrstifte sind, gekennzeichnet durch das Lösen eines Sperrstiftes und zumindest eines Moduls, das Herausnehmen des (der) Modul(e) aus dem Rahmen, wobei die Sperrsstifte mit dem Rahmen verbunden bleiben,
das Anordnen wenigstens eines Ersatzmoduls auf dem Rahmen und
das verriegelnde Eingreifen des Sperrstiftes (der Sperrstifte) und des Ersatzmoduls (der Ersatzmodule), so daß die Sperrstifte die Anordnung des Ersatzmoduls (der Ersatzmodule) auf dem Rahmen gewährleisten.

22. Verfahren nach Anspruch 21, wobei das Lösen des Sperrstiftes und des Moduls einschließt:
Anordnen einer starren Einrichtung zum Lösen des Sperrstiftes,
Einschieben der Löseeinrichtung zwischen die Seitenwände der angrenzenden Module von der Einlaßseite der Module und
Bewegen der Löseeinrichtung, so daß das Modul und der Sperrstift getrennt werden.

23. Verfahren nach Anspruch 21 oder 22, gekennzeichnet durch das Einstecken des Sperrstiftes in Öffnungen im Rahmen, bevor die Sperrstifte und die Module ineinandergreifen, dadurch gekennzeichnet, daß die Sperrstifte von der Einlaßseite des Rahmens eingesteckt werden.

24. Verfahren nach einem der Ansprüche 21 bis 23, dadurch gekennzeichnet, daß ein erster Bereich wenigstens eines Sperrstiftes in ein erstes Modul und ein zweiter Bereich des gleichen Sperrstiftes in ein zweites Modul eingreift.

## Revendications

1. Appareil de criblage de matière en particules comprenant un châssis sensiblement rigide (10), une pluralité de modules de criblage (30, 32, 34) pouvant être positionnés sensiblement en contact paroi latérale contre paroi latérale sur le châssis (10) ; le châssis (10) incluant une pluralité d'ouvertures de montage (16) ; chaque module de criblage (30, 32, 34) comprenant une matrice d'ouvertures de crible (36) de dimension prédéterminée pour permettre à la matière en particules allant jusqu'à la dimension prédéterminée de passer à travers le module de criblage (30, 32, 34), chaque module de criblage (30, 32, 34) pouvant être positionné sur le châssis (10) de sorte que la matière en particules passant à travers le module de criblage (30, 32, 34), ou chaque module de criblage, passe à travers le châssis (10) ; une pluralité d'éléments élastiques de retenue (40), chacun ayant une partie formant base (44) conçue pour être située dans une ouverture de montage (16) du châssis (10), et une partie formant tête (42) conçue pour venir en contact dans un module de criblage (30, 32, 34) sur le châssis (10) lorsque l'élément de retenue (40) est relié au châssis (10), caractérisé en ce que chaque élément de retenue est un ergot de verrouillage conçu pour venir en contact, de façon verrouillante et amovible, avec un moyen formant évidement (66) dans au moins un module et en ce que chaque ergot de verrouillage est conçu pour rester verrouillé sur le châssis (10) tout en permettant l'enlèvement d'un ou plusieurs modules (30, 32, 34) du châssis (10) et le positionnement de modules de remplacement (30, 32, 34) sur le châssis (10).

2. Appareil de criblage selon la revendication 1, caractérisé en ce que la partie formant tête d'au moins quelques uns des ergots de verrouillage est conçue pour venir en contact, de façon verrouillante et amovible, avec le moyen formant évidement (66) dans une paire adjacente de modules au niveau du contact paroi latérale contre paroi latérale.

3. Appareil de criblage selon la revendication 1 ou la revendication 2, conçu pour retenir un module individuel par contact avec quatre ergots de verrouillage espacés, deux le long de chacun des deux côtés opposés.

4. Appareil de criblage selon l'une quelconque des revendications 1 à 3, caractérisé en ce que la partie formant base (44) de chaque ergot de verrouillage est dimensionnée pour l'introduction dans une ouverture de montage (16) et comporte un évidement complémentaire (54) dimensionné pour recevoir la paroi définissant une ouverture de montage (16) pour relier l'ergot de verrouillage (40) au châssis (10) dans une position prédéterminée dans l'ouverture de montage (16), en ce que chaque ouverture de montage (16) est un cylindre de section circulaire et a un diamètre prédéterminé ; et
en ce que l'évidement (54) dans la partie formant base (44) est annulaire et a un diamètre intérieur de cylindre de section circulaire complémentaire au diamètre de l'ouverture de montage (16).

5. Appareil de criblage selon l'une quelconque des revendications 1 à 4, caractérisé en ce que :
la partie formant base (44) de chaque ergot de verrouillage est conique vers l'intérieur pour faciliter l'introduction de l'ergot de verrouillage (40) dans une ouverture de montage (16) ; et
la partie formant base (44) est arrondie vers l'extrémité inférieure pour former un nez émoussé (52) pour faciliter l'introduction de la partie formant base (44) dans une ouverture de montage (16).

6. Appareil de criblage selon l'une quelconque des revendications 1 à 5, caractérisé en ce que :
chaque ergot de verrouillage (40) est formé d'une matière élastique ; et
la partie formant base (44) comprend une fente longitudinale (46) ayant des parois intérieures (48a, 48b) de sorte que le diamètre de la partie formant base (44), au-dessous de l'évidement (54), peut être réduit en déplaçant ensemble les parois intérieures (48a, 48b) pour faciliter l'introduction de la partie formant base (44) à travers une ouverture de montage (16).

7. Appareil de criblage selon l'une quelconque des revendications 1 à 6, caractérisé en ce que :
chaque module de criblage (30, 32, 34) comprend un bord plein (37) entourant le moyen formant ouvertures de crible (36), le bord (37) comprenant une paroi latérale périphérique (64) définissant au moins un évidement (66) (formant ledit moyen formant évidement), et chaque évidement possède une forme permettant de recevoir, de manière verrouillante, la partie formant tête (42) d'un ergot de verrouillage (40).

8. Appareil de criblage selon la revendication 7, caractérisé en ce que :
chaque module de criblage (10) définit un trajet d'écoulement pour permettre à la matière en particules allant jusqu'à une dimension prédéterminée, de passer à travers le module de criblage (30, 32, 34) selon le trajet d'écoulement ;
chaque évidement (66) dans la paroi latérale (64) est sensiblement un demi-cylindre et a son axe sensiblement parallèle au trajet d'écoulement ; et
la partie formant tête (42) de chaque ergot de verrouillage associé (40) est sensiblement cylindrique, de sorte qu'une section de la partie formant tête (42) peut venir en contact, de manière verrouillante, dans un évidement (66).

9. Appareil de criblage selon l'une quelconque des revendications 1 à 8, caractérisé en ce que les ergots de verrouillage et les modules de criblage sont formés chacun de matière élastique, et en ce que les moyens formant évidement (66) des modules et des parties formant tête (42) des ergots de verrouillage sont formés l'un avec une gorge périphérique (70) et l'autre avec une collerette complémentaire (74) s'étendant perpendiculairement au moyen formant évidement et aux ergots, et positionnés pour réaliser ledit contact de verrouillage lorsque les modules viennent buter contre le châssis (10).

10. Appareil de criblage selon l'une quelconque des revendications 1 à 9, dans lequel le châssis (10) comprend une pluralité d'éléments allongés (12) espacés en parallèle pour supporter les modules de criblage (30, 32, 34) ; dans lequel les ouvertures de montage (16) sont espacées le long de chaque élément allongé (12) et sont orientées perpendiculairement au plan des éléments allongés (12) et contiennent les ergots de verrouillage ; et dans lequel les modules, chacun ayant une paroi latérale périphérique (64), sont positionnés sur le châssis (10), côte à côte, paroi latérale contre paroi latérale, le long des éléments allongés (12).

11. Appareil de criblage selon l'une quelconque des revendications 1 à 10, caractérisé en ce que chaque module de la paire adjacente de modules de criblage (30, 32, 34) comprend :
un moyen dans la paroi latérale (64) définissant un évidement sensiblement demi-cylindrique (66) d'un diamètre prédéterminé ayant un axe longitudinal perpendiculaire au plan du module (30, 32, 34) pour recevoir la partie formant tête (42) d'un ergot de verrouillage (40) ; et
un moyen définissant une gorge (70) s'étendant le long de la paroi latérale (64) à l'intérieur de l'évidement (66), parallèle au plan du module (30, 32, 34) ;
la paire de modules (30, 32, 34) étant positionnée de sorte que les évidements (70), dans les parois latérales opposées (64) des modules (30, 32, 34), correspondent l'un avec l'autre pour définir, en combinaison, un évidement sensiblement cylindrique (66) ayant une gorge périphérique (70) ;
la partie formant tête (42) de l'ergot de verrouillage (40) étant globalement cylindrique, ayant un diamètre sensiblement égal au diamètre de l'évidement cylindrique (70) pour un contact de verrouillage dans l'évidement cylindrique (66), de sorte qu'une moitié symétrique bilatérale de la partie formant tête (42) s'étend à l'intérieur de l'évidement (66) dans un premier module de la paire de modules (30, 32, 34) et l'autre moitié de la partie formant tête (42) s'étend à l'intérieur de l'évidement (66) dans le second module (30, 32, 34) ; et
la partie formant tête (42) de l'ergot de verrouillage (40) comprend, de plus, une collerette annulaire (74) s'étendant autour de la partie formant tête (42), la collerette (74) étant dimensionnée pour un contact de verrouillage dans la gorge périphérique (70) pour retenir, de manière amovible, la paire de modules (30, 32, 34) venant buter contre le châssis (10).

12. Appareil de criblage selon l'une quelconque des revendications 1 à 11, caractérisé en ce que chaque module de criblage (30, 32, 34) et chaque ergot de verrouillage (40) est formé d'une matière polymère élastique.

13. Appareil de criblage selon l'une quelconque des revendications 1 à 12, caractérisé en ce que chaque partie formant tête (42) se termine en un sommet sensiblement hémisphérique (94) pour dépasser au-dessus du côté entrée d'un module de criblage (56) pour diriger la matière en particules vers la matrice d'ouvertures de crible (36).

14. Appareil de criblage selon l'une quelconque des revendications 1 à 13, caractérisé en ce que la partie formant base de chaque ergot de verrouillage comporte un épaulement annulaire (78) pour venir en contact avec le côté inférieur du châssis (10) autour d'une ouverture de montage (16) pour résister au retrait de l'ergot de verrouillage (40) de l'ouverture de montage (16).

15. Appareil de criblage selon l'une quelconque des revendications 1 à 14, caractérisé en ce que le châssis (10) comprend :
une pluralité d'éléments rigides allongés (12) espacés en parallèle à des intervalles réguliers ; et
une pluralité d'éléments rigides transversaux (14) espacés en parallèle à des intervalles réguliers et perpendiculaires aux éléments allongés (12) ;
les éléments transversaux (14) étant fixés à chaque extrémité des éléments allongés (12) de façon à fixer les éléments allongés (12) de manière sensiblement coplanaire pour supporter les modules de criblage (30, 32, 34) positionnés sur le châssis (10) ;
les éléments allongés (12) incluant chacun une partie supérieure plate (92) pour venir en contact avec les modules de criblage (30, 32, 34) et une paire de parois latérales (98a, 98b) dépendant de la partie supérieure (92) de sorte que chaque élément allongé (12) définit un U inversé en coupe transversale pour renforcer l'élément allongé (12) ; et
les parois latérales (98a, 98b) sont rapprochées l'une de l'autre, selon un angle prédéterminé, pour permettre à la matière en particules passant à travers les modules de criblage (30, 32, 34) de passer à côté des éléments allongés (12) sans venir en contact avec les éléments allongés (12).

16. Appareil de criblage selon la revendication 15, caractérisé en ce que chaque module (30, 32, 34) comporte un bord plein (37) et en ce que le châssis (10) comprend un élément formant bord de châssis (96) définissant un bord extérieur du châssis (10), l'élément formant bord de châssis (96) étant fixé à une extrémité de chaque membre de la pluralité d'éléments transversaux (14), en parallèle aux éléments allongés (12) ;
l'élément formant bord de châssis (96) ayant une largeur approximativement égale à la largeur du bord du module (37) pour Supporter le bord extérieur des modules (30, 32, 34) tout en maximalisant la surface utile de criblage du châssis (10).

17. Appareil de criblage selon la revendication 16, comprenant au moins un ergot de verrouillage rigide fendu (100) fixé à l'élément formant bord de châssis (96) pour relier, de manière amovible, un module (30, 32, 34) au châssis (10) le long du bord extérieur du châssis (10).

18. Appareil de criblage (10) selon la revendication 15, caractérisé en ce que chaque ouverture de crible (36) s'élargit vers le côté sortie (60) de son module (30, 32, 34) à un certain angle d'ouverture, et
en ce que l'angle prédéterminé est au moins égal à l'angle d'ouverture.

19. Appareil de criblage selon la revendication 18, dans lequel l'angle d'ouverture est d'environ 2 degrés et dans lequel l'angle prédéterminé est d'environ 10 degrés.

20. Appareil de criblage selon l'une quelconque des revendications 1 à 19, dans lequel le châssis (10) comprend une pluralité d'éléments allongés parallèles (12) pour supporter les parties formant bords extérieurs (37) de modules adjacents et dans lequel la largeur maximale de chaque élément allongé (12) n'est pas supérieure à deux fois la largeur de chaque partie formant bord extérieur d'un module, de sorte que les parties extérieures (37) de deux modules en butée (30, 32, 34) recouvrent l'élément allongé et de sorte que la matière en particules passant à travers les ouvertures de crible (36) passe par l'élément allongé dépendant (98a, 98b) sans venir sensiblement en contact avec l'élément allongé.

21. Procédé de criblage qui comprend le positionnement d'une pluralité de modules de criblage, en contact paroi latérale contre paroi latérale, sur un châssis rigide ayant une pluralité d'éléments de retenue, chaque élément de retenue étant en contact avec le châssis et ayant une partie formant tête venant en contact dans un module de criblage, de sorte que le positionnement du module, ou de chaque module, est déterminé par les éléments de retenue, et dans lequel le module, ou chaque module, peut être enlevé du châssis et peut être remplacé par un autre module, caractérisé en ce que les éléments de retenue sont des ergots de verrouillage élastiques, caractérisé par le désengagement d'un ergot de verrouillage et d'au moins un module ;
par l'enlèvement du (des) modules(s) du châssis tandis que les ergots de verrouillage restent reliés au châssis ;
par le positionnement d'au moins un module de remplacement sur le châssis ; et
par la mise en contact, de manière verrouillante, de l'ergot (des ergots) de verrouillage et du (des) module(s) de remplacement, de sorte que l'ergot (les ergots) de verrouillage maintient (maintiennent) le positionnement du (des) module(s) de remplacement sur le châssis.

22. Procédé selon la revendication 21, dans lequel le désengagement de l'ergot de verrouillage et du module comprend :
la fourniture d'un moyen rigide pour désengager l'ergot de verrouillage
l'introduction du moyen de désengagement entre les parois latérales de modules adjacents depuis le côté entrée des modules ; et
le déplacement du moyen de désengagement de façon à séparer le module et l'ergot de verrouillage.

23. Procédé selon la revendication 21 ou la revendication 22, qui comprend l'introduction des ergots de verrouillage dans les ouvertures du châssis avant de mettre en contact les ergots de verrouillage et les modules, caractérisé en ce que les ergots de verrouillage sont introduits depuis le côté entrée du châssis.

24. Procédé selon l'une quelconque des revendications 21 à 23, caractérisé en ce qu'une première partie d'au moins un ergot de verrouillage vient en contact avec un premier module et en ce qu'une seconde partie du même ergot de verrouillage vient en contact avec un second module.
